# EUROPEAN PATENT SPECIFICATION

(11) **EP 2 154 845 B1**
(45) Date of publication and mention of the grant of the patent: **18.04.2012**
(21) Application number: 08773084.2
(22) Date of filing: 02.07.2008
(51) Int. Cl.: H04L 12/58, H04L 9/32, G06F 21/00

(54) **METHODS AND SYSTEMS OF MULTIMEDIA DATA DIGITAL IDENTIFICATION REGISTERING AND PROCESSING**
VERFAHREN UND SYSTEME ZUR REGISTRIERUNG UND VERARBEITUNG DIGITALER IDENTIFIKATOREN FÜR MULTIMEDIADATEN
PROCÉDÉS ET SYSTÈMES D'ENREGISTREMENT ET DE TRAITEMENT D'IDENTIFICATION NUMÉRIQUE DE DONNÉES MULTIMÉDIAS

(30) Priority: 09.07.2007 CN 200710076000
(43) Date of publication of application: 17.02.2010
(73) Proprietor: Huawei Technologies Co., Ltd., Longgang District, Shenzhen Guangdong 518129 (CN)
(72) Inventor: CHENG, Weiming, Guangdong 518129 (CN); QI, Hailong, Guangdong 518129 (CN)
(74) Representative: Thun, Clemens
(86) International application number: PCT/CN2008/071523
(87) International publication number: WO 2009/006826

(56) References cited:
- EP-A2- 1 081 912
- CN-A- 1 767 446
- CN-A- 1 852 468
- CN-A- 1 949 236
- CN-A- 1 984 086
- JP-A- 2003 348 080
- US-A1- 2003 028 660
- US-A1- 2003 115 454
- US-A1- 2007 088 848

## Description

### Technical Field

The present invention relates to digital identification technology, particularly to a method and a system for registering and processing the digital identification of multimedia data.

### Background

Digital identification technologies such as digital watermark and digital fingerprint are used to monitor (e.g., authenticating, tracking, evaluating or analyzing) the transmission of multimedia data such as picture, audio and video data, e.g. determining whether the multimedia data is allowed for distribution, or counting times of distribution of the multimedia data for rewarding distributors, or analyzing the network users' acceptance of multimedia data such as pictures and music and performing respective rewarding ranking for pictures and music. A digital watermark is a unique characteristic inserted in the multimedia data to identify the multimedia data. This characteristic information does not damage raw contents of the multimedia data nor influence the information representation and transmission of the multimedia data. A digital fingerprint is to retrieve constant characteristics in the multimedia data as a unique identification for identifying the multimedia data.

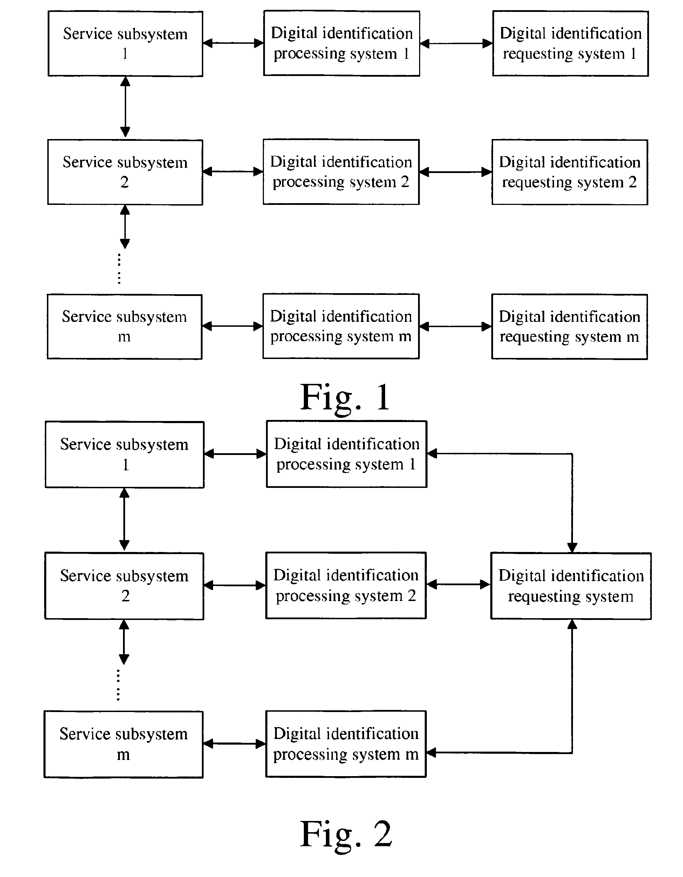

Fig. 1 shows a networking architecture for monitoring the transmission of multimedia data with digital identification information such as digital watermark/fingerprint in the prior art. A service network includes a plurality of service subsystems and a plurality of digital identification requesting systems and digital identification processing systems corresponding to the plurality of service subsystems. The digital identification requesting systems and the corresponding digital identification processing systems are logically independent from each other and may be deployed as one network entity in practice.

The digital identification requesting system may be an information input interface realized in Web or other forms. A service processing requester submits a digital identification registration request for monitoring the transmission of multimedia data through the digital identification requesting system. The digital identification registration request carries the multimedia data for registration and a related service attribute information such as start and stop service time, multimedia data naming and owner etc. The digital identification requesting system transmits a digital identification processing request carrying the multimedia data to a corresponding digital identification processing system. The digital identification processing system performs a corresponding digital identification processing on the multimedia data, for example, adding digital watermark information to the multimedia data or retrieving a digital fingerprint information out of the multimedia data, storing the raw multimedia data and the corresponding digital identification information and then returns the processed results to the digital identification requesting system.

When a service subsystem receives a multimedia data transmission request, the service subsystem submits the multimedia data to be transmitted to the corresponding digital identification processing system. The digital identification processing system monitors the transmission of multimedia data based on the stored original multimedia data and the corresponding digital identification information by means of, for example, authentication, statistics or behavior analysis of the transmission of the multimedia data, and returns the processed results to the service subsystem.

In the above-mentioned solution, since the digital identification requesting system is bound with the corresponding digital identification processing system, the digital identification processing system can not acquire data identification processing request submitted by other digital identification requesting systems and can not store the multimedia data and the corresponding digital identification information. Therefore, when transmitting the multimedia data, only a part of digital identification processing systems can monitor the transmission of the multimedia data, and thus it is inconvenient to perform a whole service network monitoring of the transmission of the multimedia data. The monitoring range of the transmission of the multimedia data is diminished, and the comprehensiveness and effectiveness of the transmission monitoring are reduced.
EP1081912A2 discloses a technology for managing the multimedia data by embedding the information to manage the distribution route or the like of the multimedia data in the multimedia data by using the electronic watermarking technique, to make it possible to manage the distribution even in new contents sales mode exploiting the features of multimedia data.
US 2003028660A1 discloses a multimedia content distribution technology for distributing stored multimedia contents to terminals such as audio-visual terminals that are capable of reproducing multimedia contents, which enables to start content distribution services before completely finishing registration of multimedia contents created at a contents provider to a service provider.

### Summary of the Invention

An object of embodiments of the present invention is to provide a method for registering the digital identification of multimedia data in order to solve the problem in the prior art that only a part of the digital identification processing systems monitors the transmission of multimedia data and thus it is inconvenient for whole-service network monitoring of the transmission of multimedia data.

Embodiments of the present invention are implemented as follows. A digital identification registration method for multimedia data, comprising:
receiving a digital identification registration request carrying the multimedia data for registration and a service attribution information of the multimedia data;
assigning by a digital identification requesting system to the multimedia data a service identification for identifying the multimedia data within a service network in which the multimedia data is transmitted; and
transmitting a digital identification processing request to all digital identification processing systems in the service network in which the multimedia data is transmitted, the digital identification processing request carrying the multimedia data and the service identification of the multimedia data.

Another object of an embodiment of the present invention is to provide a digital identification requesting system for multimedia data, comprising:
a registration request receiving unit configured to receive a digital identification registration request carrying the multimedia data for registration;
a service identification assigning unit configured to assign to the multimedia data a service identification for identify the multimedia data within a service network in which the multimedia data is transmitted; and
a processing request synchronizing unit configured to transmit a digital identification processing request to all digital identification processing systems in the service network in which the multimedia data is transmitted, the digital identification processing request carries the multimedia data and the service identification of the multimedia data.

Another object of an embodiment of the present invention is to provide a digital identification processing method for multimedia data, comprising:
Receiving, from a digital identification requesting system, a digital identification processing request carrying the multimedia data for processing and a service identification of the multimedia data;
performing a digital identification processing on the multimedia data to generate a digital identification information of the multimedia data, wherein the digital identification information identifies the multimedia data inside each digital processing system; and
storing the digital identification information of the multimedia data and a correspondence information between the digital identification information and the service identification.

Another object of an embodiment of the present invention is to provide a digital identification processing system for multimedia data, comprising:
a processing request receiving unit configured to receive, from a digital identification requesting system, a digital identification processing request carrying the multimedia data for processing and a service identification of the multimedia data;
a digital identification information generating unit configured to perform a digital identification processing on the multimedia data to generate a digital identification information of the multimedia data, wherein the digital identification information identifies the multimedia data inside each digital processing system; and
a digital identification information storage and management unit configured to store the digital identification information of the multimedia data and a correspondence information between the digital identification information and the service identification.

In the embodiments of the present invention, the digital identification requesting system synchronizes the digital identification processing request to all the digital identification processing systems in the service network to enable collective identification of the multimedia data by service subsystems in the whole service network and hence enables monitoring the transmission of multimedia data in the whole service network.

### Brief Description of Drawings

Fig. 1 is a diagram showing a networking architecture for monitoring the transmission of multimedia data with digital identification information in the prior art;

Fig. 2 is a diagram showing a networking architecture for monitoring the transmission of multimedia data with digital identification information according to an embodiment of the present invention;

Fig. 3 is an exemplary flowchart of a digital Identification Registration method in a serial mode according to an embodiment of the present invention;

Fig. 4 is an exemplary flowchart of a digital Identification Registration method in a parallel mode according to an embodiment of the present invention;

Fig. 5 is a diagram showing a Multimedia Messaging Service (MMS) networking architecture for monitoring the transmission of multimedia data with digital identification information according to an embodiment of the present invention;

Fig. 6 is an exemplary flowchart of a digital Identification Registration method in an MMS service network according to an embodiment of the present invention;

Fig. 7 is an exemplary flowchart for monitoring transmission of multimedia data with digital identification information in an MMS service network according to an embodiment of the present invention;

Fig. 8 is an architecture diagram of a digital identification requesting system according to an embodiment of the present invention;

Fig. 9 is an architecture diagram of a digital identification processing system according to an embodiment of the present invention.

### Detailed Description

In order to clarify the objects, technical solutions and advantages of the present invention, further detail description of the present invention will be given below with reference to the accompanying drawings and embodiments. It is understood that specific embodiments described herein are only for illustrating the present invention and not for limiting the present invention.

According to an embodiment of the present invention, when a digital identification requesting system receives a digital identification registration request for multimedia data, the digital identification requesting system transmits a digital identification processing request to all the digital identification processing systems in the service network related to the transmission range of the multimedia data. Each digital identification processing system performs a digital identification processing on the multimedia data that requests the processing and stores the multimedia data and a digital identification information corresponding to the multimedia data, thereby monitoring the transmission of the multimedia data in the whole service network.

Fig. 2 shows a networking architecture for monitoring the transmission of the multimedia data with the digital identification information. The service network includes a plurality of service subsystems, a plurality of digital identification processing systems corresponding to the service subsystems and one or more digital identification requesting systems.

The digital identification requesting system may acquire a routing information of all the digital identification processing systems in the service network related to the transmission range of the multimedia data, wherein the routing information may be actively reported to the digital identification requesting system by the digital identification processing systems or acquired by the digital identification requesting system through inquiry. The digital identification requesting system synchronizes the digital identification processing request to corresponding digital identification processing systems based on the acquired routing information.

Upon receiving the digital identification registration request from the service processing requester, the digital identification requesting system assigns a service identifier (ID) to the multimedia data carried in the digital identification registration request. The service ID uniquely identifies the multimedia data in the service network to ensure that all the digital identification processing systems in the service network accurately performs a monitoring processing such as authentication or transmission behavior analysis of the same multimedia data. The digital identification requesting system also stores various service attribute information of the multimedia data carried in the digital identification registration request.

In order to avoid repeating the digital identification processing on a certain multimedia data and to reduce processing load of the digital identification processing system and complexity of the service network, in the embodiments of the present invention, the digital identification requesting system may also have a digital identification processing ability. When receiving a digital identification registration request from a the service processing requester, the digital identification requesting system performs a digital identification processing on the multimedia data submitted by the service processing requester and matches the generated digital identification information with the stored digital identification information to determine whether the multimedia data has been registered. If the multimedia data has been registered, a response such as failure is returned to the service processing requester and the multimedia data would not be registered again. Whether the multimedia data has been processed repeatedly may not be determined by the digital identification requesting system but the individual digital identification processing system.

The digital identification requesting system synchronizes information such as the multimedia data which the service processing requester requests to process and the service ID of the multimedia data to the digital identification processing systems based on the routing information of the digital identification processing systems in the service network.

After receiving the digital identification processing request submitted by the digital identification requesting system, each digital identification processing system performs a digital identification processing on the multimedia data to generate a corresponding digital identification information and stores the digital identification information of the multimedia data and a correspondence information between the digital identification information of the multimedia data and the service ID of the multimedia data. Certainly, the raw multimedia data may also be stored. After having processed the multimedia data, each digital identification processing system returns a response message of success or failure to the digital identification requesting system.

According to an embodiment of the present invention, the digital identification information generated during the identification processing of the multimedia data uniquely identifies the multimedia data inside each digital processing system. The identification information may be a digital watermark, fingerprint or the like, or other identification information resulted from a relevant operation on the generated information such as digital watermark and fingerprint, such as a digit sequence resulted from the relevant operation on the digital fingerprint.

According to one embodiment of the present invention, when a digital identification requesting system receives a response message of failure returned from one of the digital identification processing systems in the service network or a cancellation request submitted by the service requester for successfully registered multimedia data, the digital identification requesting system performs a scroll-back operation by transmitting a service cancellation request with the service ID of the multimedia data for cancellation to the corresponding digital identification processing systems to cancel the original digital identification processing request, in order to avoid the case that the multimedia data can only be processed successfully in a part of the digital identification processing systems in the service network, which can not satisfy the requirement of whole-service network monitoring on the multimedia transmission. After receiving the service cancellation request, the digital identification processing systems perform a service canceling operation to cancel the stored digital identification information of the multimedia data and the correspondence information between the digital identification information of the multimedia data and the service ID of the multimedia data based on the service ID of the multimedia data for cancellation.

In embodiments of the present invention, synchronization and information transmission of the digital identification processing request between the digital identification requesting system and the digital identification processing system may be realized with messages formatted with a Hypertext Transfer Protocol (HTTP), a File Transfer Protocol (FTP) or a Simple Mail Transfer Protocol (SMTP).

Either serial mode or parallel mode may be applied when the digital identification requesting system synchronizes the digital identification processing request to all the digital identification processing systems in the service network.

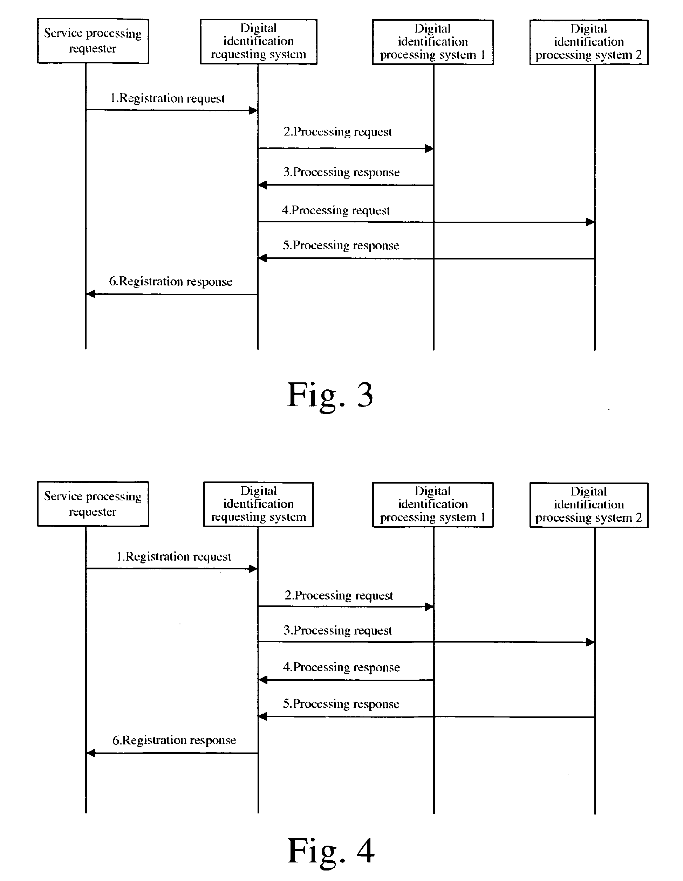

Fig. 3 shows an exemplary flowchart of a digital Identification Registration method according to an embodiment of the present invention. Taking two digital identification processing systems as an example, a serial synchronous processing is illustrated below.

1. The service processing requester submits a digital identification registration request to the digital identification requesting system, wherein the digital identification registration request carries the multimedia data for registration and a related service attribute information such as start and stop service time, multimedia data naming and the owner etc.;

2. The digital identification requesting system synchronizes a digital identification processing request to the digital identification processing system 1, wherein the digital identification processing request carries the multimedia data which the service processing requester requests to process and information such as a service ID of the multimedia data;

3. The digital identification processing system 1 performs a digital identification processing on the multimedia data and returns a processing response to the digital identification requesting system;

4. The digital identification requesting system synchronizes the digital identification processing request to the digital identification processing system 2, wherein the digital identification processing request carries the multimedia data which the service processing requester requests to process and information such as the service ID of the multimedia data;

5. The digital identification processing system 2 performs a digital identification processing on the multimedia data and returns a processing response to the digital identification requesting system;

By repeating the above-mentioned steps, the digital identification requesting system may synchronize the digital identification processing request to all the digital identification processing systems in the service network;

6. The digital identification requesting system returns a digital identification registration response to the service processing requester.

Fig. 4 shows an exemplary flowchart of a digital Identification Registration method according to an embodiment of the present invention. Taking two digital identification processing systems as an example, a parallel synchronizing processing is illustrated below.

1. The service processing requester submits a digital identification registration request to the digital identification requesting system, wherein the digital identification registration request carries the multimedia data for registration and a related service attribute information such as start and stop service time, multimedia data naming and owner etc;

2. The digital identification requesting system synchronizes the digital identification processing request to the digital identification processing system 1, wherein the digital identification processing request carries the multimedia data which the service processing requester requests to process and information such as service ID of the multimedia data;

3. The digital identification requesting system synchronizes the digital identification processing request to the digital identification processing system 2, wherein the digital identification processing request carries the multimedia data which the service processing requester requests to process and information such as the service ID of the multimedia data;

4. The digital identification processing system 1 performs a digital identification processing on the multimedia data and return a processing response to the digital identification requesting system;

5. The digital identification processing system 2 performs a digital identification processing on the multimedia data and returns a processing response to the digital identification requesting system;

By repeating the above-mentioned steps, the digital identification requesting system may synchronize the digital identification processing request to all the digital identification processing systems in the service network.

6. The digital identification requesting system returns a digital identification registration response to the service processing requester.

Embodiments of the present invention may be widely applied to service fields such as Multimedia Message Service (MMS), Wireless Application Protocol (WAP) and a detailed description of embodiments of the present invention will be set forth with MMS as an example.

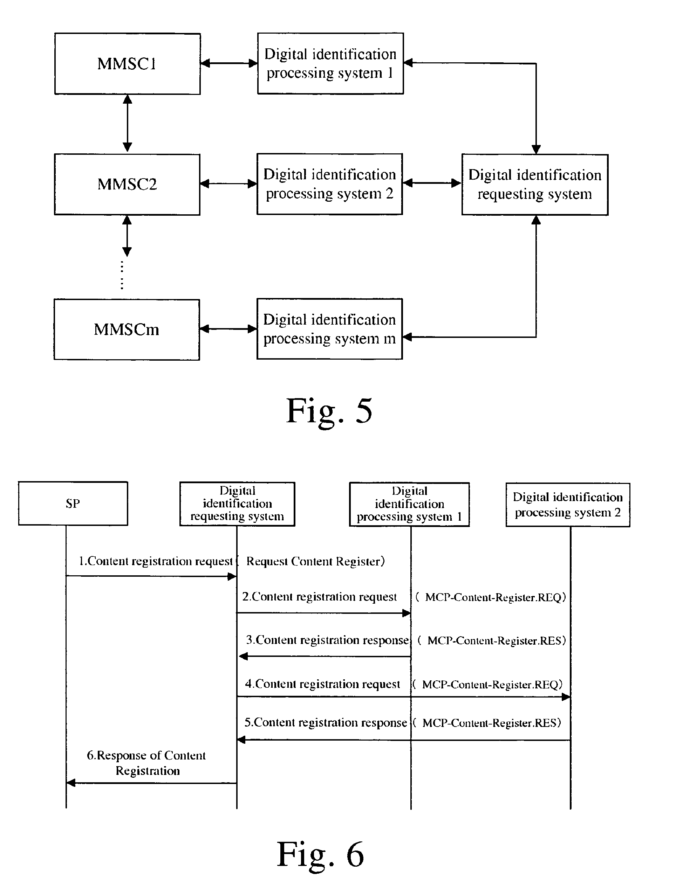

As shown in Fig. 5, each multimedia messaging service center (MMSC) corresponds to one of a plurality of digital identification processing systems and the plurality of digital identification processing systems share one digital identification requesting system in the service network. Taking two digital identification processing systems as an example, as shown in Fig. 6, a service provider (SP) hopes to distribute a picture and requests the digital identification processing on the picture before distribution:

1. The SP requests the digital identification requesting system to perform content registration by submitting the picture for processing and related service attribute information;

2. The digital identification requesting system transmits a content registration request (MCP-Content-Register.REQ) to the digital identification processing system 1, wherein the content registration request carries the picture for processing and information such as the service ID of the picture;

3. The digital identification processing system 1 performs a digital identification processing on the multimedia data and returns a content register response (MCP-Content-Register.RES) to the digital identification requesting system;

4. The digital identification requesting system transmits a content registration request (MCP-Content-Register.REQ) to the digital identification processing system 2, wherein the content registration request carries the picture for processing and information such as the service ID of the picture;

5. The digital identification processing system 2 performs a digital identification processing on the multimedia data and returns a content register response ((MCP-Content-Register.RES) to the digital identification requesting system;

By repeating the above-mentioned steps, the digital identification requesting system may synchronize the digital identification processing request to all the digital identification processing systems in the MMS service network.

6. The digital identification requesting system returns a response of content register to the SP.

In the above-mentioned example, synchronization and transmission of the digital identification processing request between the digital identification requesting system and the digital identification processing systems may be realized in an FTP manner of synchronization and binary, with the messages defined as in the following table:

| Field name | Value | Description |
|---|---|---|
| X-MCPS-Message-Type | Text-string | Necessary. |
| | | HTTP head parameter. |
| | | Specifying message type, with value of MCP-content-synchronization.REQ |
| X-MCPS-Transaction-ID | Text-string | Necessary. |
| | | HTTP head parameter. |
| | | A parameter (conversation ID) used by the client for uniquely identifying a multimedia data registering request, requiring intact MCIS returned. |
| X-MCPS-Version | Text-string | Necessary. |
| | | HTTP head parameter. |
| | | Version number of interface protocol, current version 3.0. |
| X-MCPS-SPID | Text-string | Necessary. |
| | | HTTP head parameter. |
| | | Identification of the SP requesting for registration. |
| X-MCPS-ContentID | Text-string | Necessary. |
| | | HTTP head parameter. |
| | | ID generated by the digital identification requesting system, returning this field upon successful multimedia data registration. |
| X-MCPS-MCIS-xxx | Text-string | Conditionally optional. |
| | | HTTP head parameter. |
| | | This parameter is mainly used for synchronizing MCIS internal attributes in a plurality of MCIS systems during content synchronization. If this parameter exists in the registered response message, the MCPS Portal must carry this parameter including synchronizing contents. |
| X-MCPS-MCIS-Extend-Info | Text-string | Optional. |
| | | HTTP head parameter. |
| | | Special information for MCIS defined by a manufacturer. |
| X-MCPS-Forward-Permission | Text-string | Optional. |
| | | HTTP head parameter. |
| | | Whether multimedia data is allowed to be forwarded, YES or NO, Default YES. |
| X-MCPS-Content | Binary-Stream | Necessary. |
| | | HTTP message body. |
| | | Original message of multimedia data requesting registration. Binary message stream. |

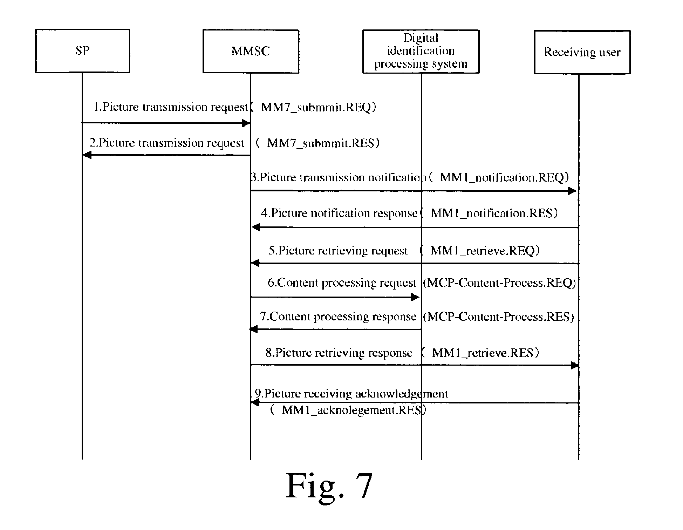

The SP may transmit the processed picture to a user. The user selects and plays the picture via MMSC and forwards the picture to other users, thereby the picture may be distributed among a user group. The MMSC cooperates with a corresponding digital identification processing system to analyze the transmission behavior of the picture, as shown in Fig. 7:

1. The SP submits the picture subjected to the digital identification processing to the MMSC in format of multimedia message (MM7_submmit.REQ);

2. The MMSC returns a receiving response to the SP after successfully receiving the submitted request (MM7_submmit. RES);

3. The MMSC sends a notification message to the receiving user (MM1_notification.REQ);

4. After receiving the notification message, the receiving user returns a response message to the MMSC (MM1_notification.RES);

5. The receiving user initiates a picture retrieving request to the MMSC (MM1_retrieve.REQ);

6. The MMSC sends a content processing request along with the picture to the corresponding digital identification processing system (MCP). The digital identification processing system performs a digital identification processing on the picture, matches the generated digital identification information with the stored digital identification information and performs a corresponding authentication or transmission behavior analysis in combination with the service ID of the picture;

7. The digital identification processing system returns a content processing response (MCP-Content-Process.RES) to the MMSC;

8. The MMSC sends to the receiving user a picture retrieving response message (MM1_retrieve.RES) carrying the picture that the user requests to retrieve;

9. After receiving the picture, the receiving user returns a receiving acknowledgement message to the MMSC (MM1_acknolegement.RES).

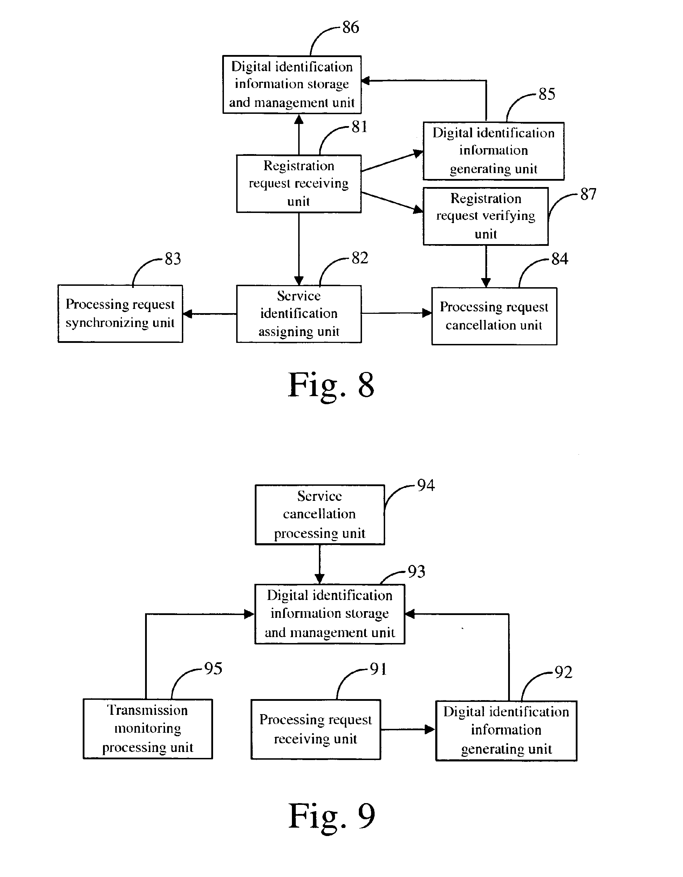

Fig. 8 shows an architecture of a digital identification requesting system according to an embodiment of the present invention. For the convenience of illustration, only those parts related to the present invention are illustrated.

The registration request receiving unit 81 receives a digital identification registration request from a service processing requester, wherein the digital identification registration request carries the multimedia data for registration and a service attribute information of the multimedia data. The service identifier assigning unit 82 assigns a service ID to the multimedia data for identifying the multimedia data in the service network related to the transmission range of the multimedia data. The processing request synchronizing unit 83 acquires a routing information of the digital identification processing systems and synchronizes the digital identification processing request to a corresponding digital identification processing system based on the acquired routing information. The digital identification processing request carries the multimedia data and the service ID of the multimedia data.

According to one embodiment of the present invention, when receiving a digital identification processing failure response returned from any digital identification processing system in the service network or a cancellation request submitted by a service requester for successfully registered multimedia data, the processing request cancellation unit 84 transmits a service cancellation request for canceling the digital identification processing on the multimedia data to the digital identification processing systems that have performed the digital identification processing on the multimedia data successfully, wherein the service cancellation request carries the service ID of the multimedia data for cancellation.

In order to avoid repeating the digital identification processing on a multimedia data and to reduce the processing load of the digital identification processing system and complexity of the service network, in embodiments of the present invention, the digital identification requesting system may also have a digital identification processing ability and the digital identification information generating unit 85 performs a digital identification processing on the multimedia data to generate the digital identification information of the multimedia data. The digital identification information storage and management unit 86 stores the digital identification information of the multimedia data and the service attribute information of the multimedia data. The multimedia data may also be stored in the digital identification information storage and management unit 86. The digital identification information and the service attribute information of the multimedia data may be stored in the digital identification requesting system locally or in a third party system.

When receiving the digital identification registration request, the registration request verifying unit 87 compares the digital identification information generated after performing the digital identification processing on the multimedia data carried in the digital identification registration request with the stored digital identification information to determine whether the multimedia data has been registered. If the multimedia data has been registered, a response such as failure is returned to the service processing requester so as not to register the multimedia data any more.

Fig. 9 shows an architecture of the digital identification processing system according to an embodiment of the present invention. For the convenience of description, only the parts related to the present invention are illustrated.

The processing request receiving unit 91 receives a digital identification processing request from the digital identification requesting system, wherein the digital identification processing request carries the multimedia data for processing and the service ID of the multimedia data. The digital identification information generating unit 92 performs a digital identification processing on the multimedia data to generate a digital identification information of the multimedia data. The digital identification information storage and management unit 93 stores the digital identification information of the multimedia data and the correspondence information between the digital identification information and the service ID. The multimedia data may also be stored in the digital identification information storage and management unit 93. The digital identification information of the multimedia data and the correspondence information between the digital identification information and the service ID may be stored in the digital identification requesting system locally or in a third party system.

The service cancellation processing unit 94 receives a service cancellation request transmitted from the digital identification processing system and cancels the stored digital identification information of the multimedia data based on the service ID of the multimedia data carried in the service cancellation request.

The transmission monitoring processing unit 95 receives a multimedia data transmission request transmitted from a service subsystem and performs a monitoring processing, such as authentication or transmission behavior analysis, of the transmission of the multimedia data based on the digital identification information generated after performing the digital identification processing on the multimedia data carried in the multimedia data transmission request and the service ID corresponding to the digital identification information.

In embodiments of the present invention, the digital identification requesting system synchronizes the digital identification processing request to all the digital identification processing systems in the service network. Collective identification of the multimedia data by service subsystems in the whole service network is realized by one time processing in the service network, thereby resolving the problem that multiple digital identification requesting systems in the service region can not process multimedia data collectively and hence realizing monitoring the transmission of multimedia data in the whole service network.

## Claims

1. A digital identification registration method for multimedia data, comprising:
receiving a digital identification registration request carrying multimedia data for registration;
assigning by a digital identification requesting system to the multimedia data a service identification for identifying the multimedia data within a service network in which the multimedia data is transmitted; and
transmitting a digital identification processing request to all digital identification processing systems in the service network in which the multimedia data is transmitted, the digital identification processing request carrying the multimedia data and the service identification of the multimedia data.

2. The method of claim 1, further comprising:
performing, by each of the digital identification processing systems, a digital identification processing on the multimedia data to generate a digital identification information of the multimedia data and store the digital identification information of the multimedia data, wherein the digital identification information identifies the multimedia data inside the digital identification processing system.

3. The method of claim 2, further comprising:
transmitting a service cancellation request for canceling the digital identification processing on the multimedia data, wherein the service cancellation request carries the service identification of the multimedia data for cancellation.

4. The method of claim 1, further comprising:
performing a digital identification processing on the multimedia data to generate a digital identification information of the multimedia data and store the digital identification information of the multimedia data,
when receiving the digital identification registration request, performing the digital identification processing on the multimedia data carried in the digital identification registration request and comparing the digital identification information generated in the digital identification processing with a stored digital identification information to determine whether the multimedia data has been registered.

5. The method of any of claims 1 to 4, wherein the digital identification processing request is a message formatted with a hyper text transport protocol, HTTP, a file transfer protocol, FTP, or a simple mail transfer protocol, SMTP.

6. A digital identification requesting system for multimedia data, comprising:
a registration request receiving unit (81) configured to receive a digital identification registration request carrying the multimedia data for registration;
a service identification assigning unit (82) configured to assign to the multimedia data a service identification for identifying the multimedia data within a service network in which the multimedia data is transmitted; and
a processing request synchronizing unit (83) configured to transmit a digital identification processing request to all digital identification processing systems in the service network in which the multimedia data is transmitted, the digital identification processing request carries the multimedia data and the service identification of the multimedia data.

7. The system of claim 6, further comprising:
a processing request cancellation unit (84) configured to transmit a service cancellation request to request the canceling of the digital identification processing on the multimedia data, wherein the service cancellation request carries the service identification of the multimedia data for cancellation.

8. The system of claim 6, further comprising:
a digital identification information generating unit configured to perform a digital identification processing on the multimedia data to generate a digital identification information of the multimedia data, wherein the digital identification information identifies the multimedia data inside a digital identification processing system; and
a digital identification information storage and management unit configured to store the digital identification information of the multimedia data.

9. The system of claim 8, further comprising:
a registration request verifying unit (87) configured to, when receiving the digital identification registration request, compare digital identification information generated after performing the digital identification processing on the multimedia data carried in the digital identification registration request with the stored digital identification information to determine whether the multimedia data has been registered.

10. The system of any of claims 6 to 9, wherein the digital identification processing request is a message formatted with a hyper text transport protocol, HTTP, a file transfer protocol, FTP, or a simple mail transfer protocol, SMTP.

11. A digital identification processing method for multimedia data, comprising:
a digital identification processing system receiving, from a digital identification requesting system, a digital identification processing request carrying the multimedia data for processing and a service identification of the multimedia data;
performing a digital identification processing on the multimedia data to generate a digital identification information of the multimedia data, wherein the digital identification information identifies the multimedia data inside the digital identification processing system; and
storing the digital identification information of the multimedia data and a correspondence information between the digital identification information and the service identification.

12. The method of claim 11, further comprising:
receiving a service cancellation request from the digital identification requesting system and canceling the stored digital identification information corresponding to the service identification of the multimedia data carried in the service cancellation request.

13. The method of claim 11, further comprising:
receiving a multimedia data transmission request, performing a digital identification processing on the multimedia data carried in the multimedia data transmission request and performing a monitoring processing on the transmission of the multimedia data based on the digital identification information generated in the digital identification processing and the service identification corresponding to the digital identification information.

14. A digital identification processing system for multimedia data, comprising:
a processing request receiving unit (91) configured to receive, from a digital identification requesting system, a digital identification processing request carrying the multimedia data for processing and a service identification of the multimedia data;
a digital identification information generating unit (92) configured to perform a digital identification processing on the multimedia data to generate a digital identification information of the multimedia data, wherein the digital identification information identifies the multimedia data inside the digital identification processing system; and
a digital identification information storage and management unit (93) configured to store the digital identification information of the multimedia data and a correspondence information between the digital identification information and the service identification.

15. The system of claim 14, further comprising:
a service cancellation processing unit (94) configured to receive, from the digital identification requesting system, a service cancellation request and cancel the stored digital identification information corresponding to the service identification of the multimedia data carried in the service cancellation request.

16. The system of claim 14, further comprising:
a transmission monitoring processing unit configured to receive a multimedia data transmission request transmitted from a service subsystem, and perform a monitoring processing on the transmission of the multimedia data based on the digital identification information generated after performing the digital identification processing on the multimedia data carried in the multimedia data transmission request and the service identification corresponding to the digital identification information.

## Patentansprüche

1. Registrierungsverfahren für die digitale Identifikation für Multimediadaten, das Folgendes umfasst:
Empfangen einer Registrierungsanforderung für die digitale Identifikation, die Multimediadaten für die Registrierung führt;
Zuweisen einer Dienstidentifikation zum Identifizieren der Multimediadaten in einem Dienstnetz, in dem die Multimediadaten übertragen werden, zu den Multimediadaten durch ein Anforderungssystem für die digitale Identifikation; und
Übertragen einer Verarbeitungsanforderung für die digitale Identifikation zu allen Verarbeitungssystemen für die digitale Identifikation in dem Dienstnetz, in dem die Multimediadaten übertragen werden, wobei die Verarbeitungsanforderung für die digitale Identifikation die Multimediadaten und die Dienstidentifikation der Multimediadaten führt.

2. Verfahren nach Anspruch 1, das ferner Folgendes umfasst:
Ausführen einer Verarbeitung der digitalen Identifikation an den Multimediadaten durch jedes der Verarbeitungssysteme für die digitale Identifikation, um digitale Identifikationsinformationen der Multimediadaten zu erzeugen und die digitalen Identifikationsinformationen der Multimediadaten zu speichern, wobei die digitalen Identifikationsinformationen die Multimediadaten innerhalb des Verarbeitungssystems für die digitale Identifikation identifizieren.

3. Verfahren nach Anspruch 2, das ferner Folgendes umfasst:
Übertragen einer Dienstannullierungsanforderung zum Annullieren der Verarbeitung der digitalen Identifikation an den Multimediadaten, wobei die Dienstannullierungsanforderung die Dienstidentifikation der Multimediadaten für die Annullierung führt.

4. Verfahren nach Anspruch 1, das ferner Folgendes umfasst:
Ausführen einer Verarbeitung der digitalen Identifikation an den Multimediadaten, um digitale Identifikationsinformationen der Multimediadaten zu erzeugen und die digitalen Identifikationsinformationen der Multimediadaten zu speichern,
Ausführen der Verarbeitung der digitalen Identifikation an den in der Registrierungsanforderung für die digitale Identifikation geführten Multimediadaten, wenn die Registrierungsanforderung für die digitale Identifikation empfangen wird, und Vergleichen der bei der Verarbeitung der digitalen Identifikation erzeugten digitalen Identifikationsinformationen mit gespeicherten digitalen Identifikationsinformationen, um zu bestimmen, ob die Multimediadaten registriert worden sind.

5. Verfahren nach einem der Ansprüche 1 bis 4, wobei die Verarbeitungsanforderung für die digitale Identifikation eine Nachricht ist, die mit einem Hypertext-Transportprotokoll, HTTP, einem Dateiübertragungsprotokoll, FTP, oder einem einfachen Postübertragungsprotokoll, SMTP, formatiert ist.

6. Anforderungssystem für die digitale Identifikation für Multimediadaten, das Folgendes umfasst:
eine Registrierungsanforderungs-Empfangseinheit (81), die konfiguriert ist, um eine Registrierungsanforderung für die digitale Identifikation zu empfangen, die die Multimediadaten für die Registrierung führt;
eine Dienstidentifikations-Zuweisungseinheit (82), die konfiguriert ist, um den Multimediadaten eine Dienstidentifikation zum Identifizieren der Multimediadaten in einem Dienstnetz, in dem die Multimediadaten übertragen werden, zuzuteilen; und
eine Verarbeitungsanforderungs-Synchronisationseinheit (83), die konfiguriert ist, um eine Verarbeitungsanforderung für die digitale Identifikation an alle Verarbeitungssysteme für die digitale Identifikation in dem Dienstnetz, in dem die Multimediadaten übertragen werden, zu übertragen, wobei die Verarbeitungsanforderung für die digitale Identifikation die Multimediadaten und die Dienstidentifikation der Multimediadaten führt.

7. System nach Anspruch 6, das ferner Folgendes umfasst:
eine Verarbeitungsanforderungs-Annullierungseinheit (84), die konfiguriert ist, um eine Dienstannullierungsanforderung zu übertragen, um das Annullieren der Verarbeitung der digitalen Identifikation an den Multimediadaten anzufordern, wobei die Dienstannullierungsanforderung die Dienstidentifikation der Multimediadaten für die Annullierung führt.

8. System nach Anspruch 6, das ferner Folgendes umfasst:
eine Erzeugungseinheit für digitale Identifikationsinformationen, die konfiguriert ist,
um eine Verarbeitung der digitalen Identifikation an den Multimediadaten auszuführen, um digitale Identifikationsinformationen der Multimediadaten zu erzeugen, wobei die digitalen Identifikationsinformationen die Multimediadaten innerhalb eines Verarbeitungssystems für die digitale Identifikation identifizieren; und
eine Speicher- und Managementeinheit für digitale Identifikationsinformationen, die konfiguriert ist, um die digitalen Identifikationsinformationen der Multimediadaten zu speichern.

9. System nach Anspruch 8, das ferner Folgendes umfasst:
eine Registrierungsanforderungs-Verifizierungseinheit (87), die konfiguriert ist, um, wenn die Registrierungsanforderung für die digitale Identifikation empfangen wird, digitale Identifikationsinformationen, die nach dem Ausführen der Verarbeitung der digitalen Identifikation an den Multimediadaten, die in der Registrierungsanforderung für die digitale Identifikation geführt werden, erzeugt werden, mit den gespeicherten digitalen Identifikationsinformationen zu vergleichen, um zu bestimmen, ob die Multimediadaten registriert worden sind.

10. System nach einem der Ansprüche 6 bis 9, wobei die Verarbeitungsanforderung für die digitale Identifikation eine Nachricht ist, die mit einem Hypertext-Transportprotokoll, HTTP, einem Dateiübertragungsprotokoll, FTP, oder einem einfachen Postübertragungsprotokoll, SMTP, formatiert ist.

11. Verfahren zum Verarbeiten der digitalen Identifikation für Multimediadaten, das Folgendes umfasst:
Empfangen durch ein Verarbeitungssystem für die digitale Identifikation einer Verarbeitungsanforderung für die digitale Identifikation, die die Multimediadaten für die Verarbeitung und eine Dienstidentifikation der Multimediadaten führt, von einem Anforderungssystem für die digitale Identifikation;
Ausführen einer Verarbeitung der digitalen Identifikation an den Multimediadaten, um digitale Identifikationsinformationen der Multimediadaten zu erzeugen, wobei die digitalen Identifikationsinformationen die Multimediadaten innerhalb des Verarbeitungssystems für die digitale Identifikation identifizieren; und
Speichern der digitalen Identifikationsinformationen der Multimediadaten und der Übereinstimmungsinformationen zwischen den digitalen Identifikationsinformationen und der Dienstidentifikation.

12. Verfahren nach Anspruch 11, das ferner Folgendes umfasst:
Empfangen einer Dienstannullierungsanforderung von dem Anforderungssystem für die digitale Identifikation und Annullieren der gespeicherten digitalen Identifikationsinformationen, die der Dienstidentifikation der Multimediadaten entsprechen, die in der Dienstannullierungsanforderung geführt werden.

13. Verfahren nach Anspruch 11, das ferner Folgendes umfasst:
Empfangen einer Multimediadaten-Übertragungsanforderung, Ausführen einer Verarbeitung der digitalen Identifikation an den in der Multimediadaten-Übertragungsanforderung geführten Multimediadaten und Ausführen einer Überwachungsverarbeitung bei der Übertragung der Multimediadaten basierend auf den bei der Verarbeitung der digitalen Identifikation erzeugten digitalen Identifikationsinformationen und der Dienstidentifikation, die den digitalen Identifikationsinformationen entspricht.

14. Verarbeitungssystem für die digitale Identifikation für Multimediadaten, das Folgendes umfasst:
eine Verarbeitungsanforderungs-Empfangseinheit (91), die konfiguriert ist, um von einem Anforderungssystem für die digitale Identifikation eine Verarbeitungsanforderung für die digitale Identifikation zu empfangen, die die Multimediadaten für die Verarbeitung und eine Dienstidentifikation der Multimediadaten führt;
eine Erzeugungseinheit (92) für digitale Identifikationsinformationen, die konfiguriert ist, um eine Verarbeitung der digitalen Identifikation an den Multimediadaten auszuführen, um digitale Identifikationsinformationen der Multimediadaten zu erzeugen, wobei die digitalen Identifikationsinformationen die Multimediadaten innerhalb des Verarbeitungssystems für die digitale Identifikation identifizieren; und
eine Speicher- und Managementeinheit (93) für die digitalen Identifikationsinformationen, die konfiguriert ist, um die digitalen Identifikationsinformationen der Multimediadaten und Übereinstimmungsinformationen zwischen den digitalen Identifikationsinformationen und der Dienstidentifikation zu speichern.

15. System nach Anspruch 14, das ferner Folgendes umfasst:
eine Dienstannullierungs-Verarbeitungseinheit (94), die konfiguriert ist, um von dem Anforderungssystem für die digitale Identifikation eine Dienstannullierungsanforderung zu empfangen und die gespeicherten digitalen Identifikationsinformationen, die der Dienstidentifikation der Multimediadaten entsprechen, die in der Dienstannullierungsanforderung geführt werden, zu annullieren.

16. System nach Anspruch 14, das ferner Folgendes umfasst:
eine Übertragungsüberwachungs-Verarbeitungseinheit, die konfiguriert ist, um eine von einem Dienstuntersystem übertragene Multimediadaten-Übertragungsanforderung zu empfangen und eine Überwachungsverarbeitung bei der Übertragung der Multimediadaten basierend auf den nach Ausführen der Verarbeitung der digitalen Identifikation an den Multimediadaten, die in der Multimediadaten-Übertragungsanforderung geführt werden, erzeugten digitalen Identifikationsinformationen und der Dienstidentifikation, die den digitalen Identifikationsinformationen entspricht, auszuführen.

## Revendications

1. Procédé d'enregistrement d'identification numérique de données multimédia, comprenant :
la réception d'une requête d'enregistrement d'identification numérique portant des données multimédia à enregistrer ;
l'attribution par un système de requête d'identification numérique aux données multimédia d'une identification de service pour identifier les données multimédia dans un réseau de service dans lequel les données multimédia sont transmises ; et
la transmission d'une requête de traitement d'identification numérique à tous les systèmes de traitement d'identification numérique dans le réseau de service dans lequel les données multimédia sont transmises, la requête de traitement d'identification numérique portant les données multimédia et l'identification de service des données multimédia.

2. Procédé selon la revendication 1, comprenant en outre :
l'exécution, par chacun des systèmes de traitement d'identification numérique, d'un traitement d'identification numérique sur les données multimédia afin de générer une information d'identification numérique des données multimédia et de mémoriser l'information d'identification numérique des données multimédia, dans lequel l'information d'identification numérique identifie les données multimédia à l'intérieur du système de traitement d'identification numérique.

3. Procédé selon la revendication 2, comprenant en outre:
la transmission d'une requête de suppression de service pour supprimer le traitement d'identification numérique sur les données multimédia, la requête de suppression de service portant l'identification de service des données multimédia à supprimer.

4. Procédé selon la revendication 1, comprenant en outre :
l'exécution d'un traitement d'identification numérique sur les données multimédia afin de générer une information d'identification numérique des données multimédia et de mémoriser l'information d'identification numérique des données multimédia,
à la réception de la requête d'enregistrement d'identification numérique, l'exécution du traitement d'identification numérique sur les données multimédia portées dans la requête d'enregistrement d'identification numérique et la comparaison de l'information d'identification numérique générée dans le traitement d'identification numérique à une information d'identification numérique mémorisée afin de déterminer si les données multimédia ont été enregistrées ou non.

5. Procédé selon l'une quelconque des revendications 1 à 4, dans lequel la requête de traitement d'identification numérique est un message formaté avec un protocole de transport hypertexte, HTTP, un protocole de transfert de fichiers, FTP, ou un protocole de transfert de courrier simple, SMTP.

6. Système de requête d'identification numérique de données multimédia, comprenant :
une unité de réception de requête d'enregistrement (81) configurée pour recevoir une requête d'enregistrement d'identification numérique portant les données multimédia à enregistrer ;
une unité d'attribution d'identification de service (82) configurée pour attribuer aux données multimédia une identification de service pour identifier les données multimédia dans un réseau de service dans lequel les données multimédia sont transmises ; et
une unité de synchronisation de requête de traitement (83) configurée pour transmettre une requête de traitement d'identification numérique à tous les systèmes de traitement d'identification numérique dans le réseau de service dans lequel les données multimédia sont transmises, la requête de traitement d'identification numérique portant les données multimédia et l'identification de service des données multimédia.

7. Système selon la revendication 6, comprenant en outre :
une unité de suppression de requête de traitement (84) configurée pour transmettre une requête de suppression de service pour demander la suppression du traitement d'identification numérique sur les données multimédia, la requête de suppression de service portant l'identification de service des données multimédia à supprimer.

8. Système selon la revendication 6, comprenant en outre :
une unité de génération d'information d'identification numérique configurée pour exécuter un traitement d'identification numérique sur les données multimédia afin de générer une information d'identification numérique des données multimédia,
l'information d'identification numérique identifiant les données multimédia à l'intérieur d'un système de traitement d'identification numérique ; et
une unité de mémorisation et de gestion d'information d'identification numérique configurée pour mémoriser l'information d'identification numérique des données multimédia.

9. Système selon la revendication 8, comprenant en outre :
une unité de vérification de requête d'enregistrement (87), configurée, à la réception de la requête d'enregistrement d'identification numérique, pour comparer l'information d'identification numérique générée après l'exécution du traitement d'identification numérique sur les données multimédia portées dans la requête d'enregistrement d'identification numérique à l'information d'identification numérique mémorisée afin de déterminer si les données multimédia ont été enregistrées ou non.

10. Système selon l'une quelconque des revendications 6 à 9, dans lequel la requête de traitement d'identification numérique est un message formaté avec un protocole de transport hypertexte, HTTP, un protocole de transfert de fichiers, FTP, ou un protocole de transfert de courrier simple, SMTP.

11. Procédé de traitement d'identification numérique de données multimédia, comprenant
la réception, par un système de traitement d'identification numérique, depuis un système de requête d'identification numérique, d'une requête de traitement d'identification numérique portant les données multimédia à traiter et une identification de service des données multimédia ;
l'exécution d'un traitement d'identification numérique sur les données multimédia afin de générer une information d'identification numérique des données multimédia, l'information d'identification numérique identifiant les données multimédia à l'intérieur du système de traitement d'identification numérique ; et
la mémorisation de l'information d'identification numérique des données multimédia et d'une information de correspondance entre l'information d'identification numérique et l'identification de service.

12. Procédé selon la revendication 11, comprenant en outre :
la réception d'une requête de suppression de service depuis le système de requête d'identification numérique et la suppression de l'information d'identification numérique mémorisée correspondant à l'identification de service des données multimédia portées dans la requête de suppression de service.

13. Procédé selon la revendication 11, comprenant en outre :
la réception d'une requête de transmission de données multimédia, l'exécution d'un traitement d'identification numérique sur les données multimédia portées dans la requête de transmission de données multimédia et l'exécution d'un traitement de contrôle sur la transmission des données multimédia en fonction de l'information d'identification numérique générée dans le traitement d'identification numérique et de l'identification de service correspondant à l'information d'identification numérique.

14. Système de traitement d'identification numérique de données multimédia, comprenant :
une unité de réception de requête de traitement (91) configurée pour recevoir, depuis un système de requête d'identification numérique, une requête de traitement d'identification numérique portant les données multimédia à traiter et une identification de service des données multimédia ;
une unité de génération d'information d'identification numérique (92) configurée pour exécuter un traitement d'identification numérique sur les données multimédia afin de générer une information d'identification numérique des données multimédia,
l'information d'identification numérique identifiant les données multimédia à l'intérieur du système de traitement d'identification numérique ; et
une unité de mémorisation et gestion d'information d'identification numérique (93) configurée pour mémoriser l'information d'identification numérique des données multimédia et une information de correspondance entre l'information d'identification numérique et l'identification de service.

15. Système selon la revendication 14, comprenant en outre :
une unité de traitement de suppression de service (94) configurée pour recevoir, depuis le système de requête d'identification numérique, une requête de suppression de service et supprimer l'information d'identification numérique mémorisée correspondant à l'identification de service des données multimédia portées dans la requête de suppression de service.

16. Système selon la revendication 14, comprenant en outre :
une unité de traitement de contrôle de transmission configurée pour recevoir une requête de transmission de données multimédia transmise par un sous-système de service, et exécuter un traitement de contrôle sur la transmission des données multimédia en fonction de l'information d'identification numérique générée après l'exécution du traitement d'identification numérique sur les données multimédia portées dans la requête de transmission de données multimédia et l'identification de service correspondant à l'information d'identification numérique.
